# EUROPÄISCHE PATENTSCHRIFT

(11) **EP 1 195 306 B1**
(45) Veröffentlichungstag und Bekanntmachung des Hinweises auf die Patenterteilung: **30.11.2005**
(21) Anmeldenummer: 01810958.7
(22) Anmeldetag: 03.10.2001
(51) Int. Cl.: B61B 12/00, B60J 10/00

(54) **Scheibenbefestigung für eine Haube eines Sesselliftes**
Mounting of a window panel for a hood of a chair lift
Fixation d'une vitre pour un capot d'un télésiège

(30) Priorität: 04.10.2000 CH 19522000
(43) Veröffentlichungstag der Anmeldung: 10.04.2002
(73) Patentinhaber: Ropetrans AG, 6410 Goldau (CH)
(72) Erfinder: Switzeny, Kurt, 6440 Brunnen (CH)
(74) Vertreter: Liebetanz, Michael

(56) Entgegenhaltungen:
- EP-A- 0 627 341
- FR-A- 2 687 351
- US-A- 4 621 469
- US-A- 4 969 293

## Beschreibung

Die Erfindung betrifft eine Scheibenbefestigung für eine Haube eines Sesselliftes mit einem Haubenrahmen, der einen die Scheibe der Haube aufnehmenden Schlitz aufweist, und mit einem in den Haubenrahmen einsetzbaren Gummiprofil, welches im Querschnitt einstückig ist, welches in der Tiefe des Schlitzes aus weicherem Material besteht als in dem mit dem Haubenrahmen im Eingriff stehenden oberen Abschnitt,

Eine solche Scheibenbefestigung für eine Autoscheibe ist aus der FR-A-2,687,351 bekannt, bei der ein Gummiprofil eingesetzt wird, welches mit einem härteren Material mit einem Rahmen im Eingriff steht und welches mit einem weicheren Material die Scheibe umgeben kann. Zwischen den Flügeln des härteren und weicheren Materials ist auf beiden Seiten einer eingeführten Scheibe ein Schlitz.

Im Stand der Technik ist es für Sessellifte bekannt, grossflächige Kunststoffhauben an einem verschwenkbaren Rahmen zu befestigen, wobei der Rahmen dazu dient, die Haube beim Gebrauch zu schliessen und zu öffnen. Dabei wird derzeit der Bereich zwischen Scheibe und Haubenrahmen umschäumt oder verklebt. Eine weitere bekannte Möglichkeit ist die Befestigung der Scheibe mittels Schrauben, die den Rahmen um die Scheibe der Haube zusammenpressen.

Beide Vorgehensweisen des Standes der Technik sind optisch nicht sonderlich attraktiv und sind darüber hinaus umständlich zu montieren und die Scheibe einer Haube ist nur zeitaufwendig zu ersetzen.

Ausgehend vom diesem Stand der Technik liegt der Erfindung die Aufgabe zugrunde, eine Befestigung der eingangs genannten Art anzugeben, mit der diese Probleme behoben sind.

Diese Aufgabe wird erfindungsgemäss dadurch gelöst, dass an dem oberen Abschnitt aus härterem Material des Gummiprofils mindestens ein Paar von in das Innere des Schlitzes gerichtete Gummilippen aus weichem Material vorgesehen sind, die sich paarweise gegenüberliegen.

Vorteilhafterweise sind an dem härteren Material des Gummiprofils mindestens ein Paar von in das Innere des Schlitzes gerichtete Gummilippen aus weichem Material vorgesehen, die sich paarweise gegenüberliegen.

Durch das Vorsehen von härterem und weicherem Material in dem einstückigen Profil ist es möglich, im Bereich des klemmenden Haubenrahmens einen starreren Gummi zu verwenden, wohingegen der das Scheibenende der Haube umgebende Teil weicher ist. Durch das Vorsehen der einander gegenüberliegenden nach innen gerichteten weichen Dichtlippen wird ein Herausrutschen der Scheibe gegen die Klemmkraft des Haubenrahmens sicher vermieden.

Weitere vorteilhafte Ausführungsformen sind in den Unteransprüchen gekennzeichnet.

Im Anschluss wird die Erfindung anhand eines bevorzugten Ausführungsbeispiels näher beschrieben. Es zeigen:
- Fig. 1: eine perspektivische Ansicht eines Haubenrahmens mit einer eingesetzten Gummidichtung gemäss einem ersten Ausführungsbeispiel der Erfindung,
- Fig. 2: eine Querschnittsansicht der Gummidichtung zum Einsatz nach Fig. 1,
- Fig. 3: eine Querschnittsansicht der Gummidichtung nach Fig. 1 mit eingesetzter Scheibe,
- Fig. 4: eine perspektivische Ansicht eines Haubenrahmens mit der Gummidichtung nach Fig. 2 gemäss einem zweiten Ausführungsbeispiel mit einem Schutzrohr und einem zusätzlich angebrachten Schutzprofil, und
- Fig. 5: eine perspektivische Ansicht eines weiteren Haubenrahmens mit der Gummidichtung nach Fig. 2.

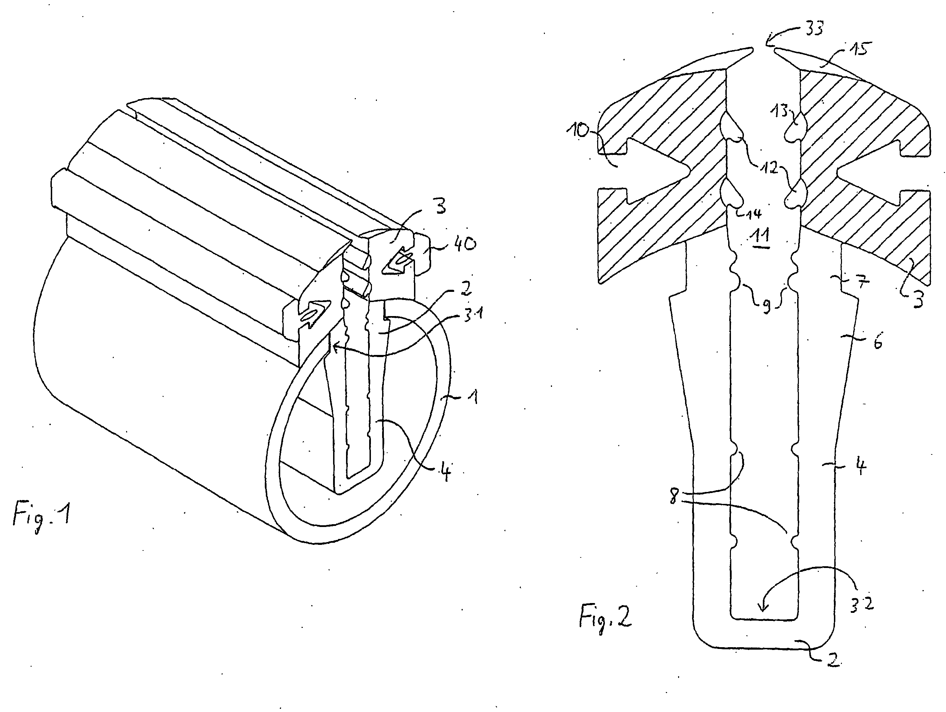

Die Fig. 1 zeigt einen Haubenrahmen 1, der im wesentlichen aus einem runden Rohr besteht, welches an der einen Seite über eine gewisse Breite 31 aufgeschnitten ist. Durch diese Öffnung 31 wird eine Gummidichtung 2 in das Rohr eingesetzt, die im wesentlichen der Form eines Buchstabens U folgt. Die Dichtung 2 besteht im wesentlichen aus zwei unterschiedlichen Bereichen, einem breiten oberen Bereich 3 aus hartem Gummi und einem schmaleren, unteren Bereich 4 aus weicherem Gummi. Dabei handelt es sich bei dem harten Gummi z.B. um EPDM mit einer Shore Härte von 80 bis 95 und das weiche Gummi hat eine Shore Härte von z.B. zwischen 60 und 75. Wesentlich ist, dass ein Härteunterschied im Gummimaterial zwischen den beiden Bereichen 3 und 4 besteht. In der Fig. 1 ist die Dichtung 2 so eingesetzt, dass der weiche Gummibereich 4 in dem Rohr 1 versenkt ist, wo hingegen der harte Gummibereich 3 über das Rohr 1 hinaussteht. In dem härteren Bereich 3 bestehen gegenüberliegende pfeilförmige Nuten 10, die hier durch Abdeckprofile 40 verschlossen sind.

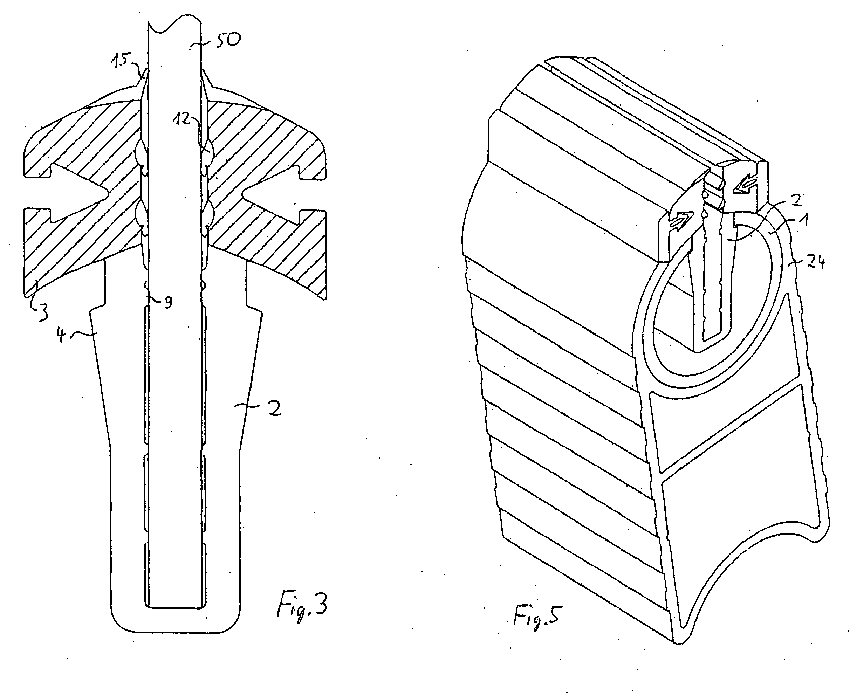

Die Fig. 2 zeigt in einer Querschnittsansicht die Dichtung 2 aus Fig. 1. Gleiche Merkmale sind in allen Fig. mit den gleichen Bezugszeichen versehen. Der untere Abschnitt 4 verfügt über eine Verdickung 6, die vor dem Übergang in den Bereich 3 des härteren Gummis eine Einschnürung 7 aufweist, die in dem Ausschnitt 31 des Rohres 1 zu liegen kommt. In der Tiefe des unteren Gummiteiles 4 sind an zwei Stellen gegenüberliegend Klemmwülste 8 vorgesehen. Entsprechende paarweise Auskragungen 9 sind auch im Bereich der Einschnürung 7 vorgesehen. Es können auch keine, ein Paar oder mehr Paare von Klemmwülsten und Auskragungen 8 bzw. 9 vorgesehen sein.

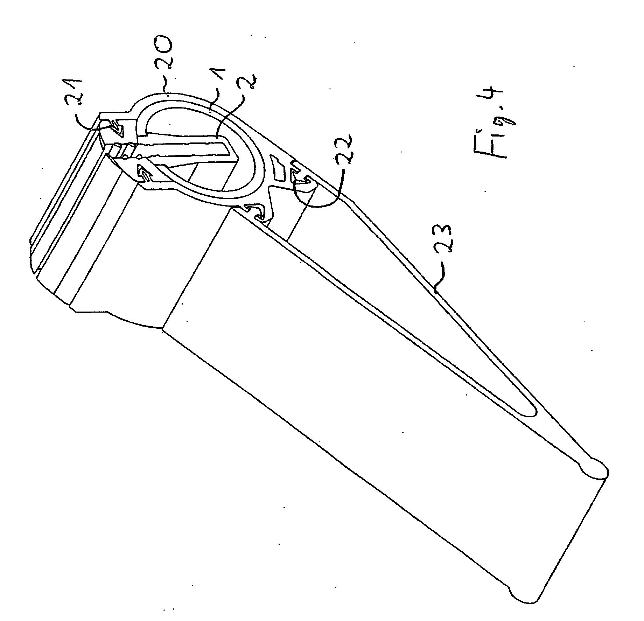

Der obere Elementabschnitt 3 aus hartem Gummi verfügt über zwei gegenüberliegende pfeilförmige Nuten 10, deren mögliche Funktion im Zusammenhang mit den Fig. 3 und 4 erläutert wird. Im die Scheibe aufnehmenden Innenraum 11 der Dichtung 2 sind zwei mal zwei Paare von aus weichem Gummi bestehenden Dichtlippen 12 vorgesehen, die in einem Winkel von ungefähr bis zu mehr als 45° in Richtung der Tiefe 32 der Dichtung 2 ausgerichtet sind. Beim Einschieben der Scheibe der Haube durch den Schlitz 11 in die Tiefe 32 des Dichtungsprofils 2 werden diese Auskragungen 12 an ihren in Einführungsrichtung im stumpfen Winkel stehenden Seiten 13 umgebogen, wohingegen die einen spitzen Winkel zur Wand aufweisenden Rückseiten 14 ein Zurückziehen der Scheibe wirksam verhindern. Im oberen Endbereich 33 der Dichtung 2 sind zwei gegenüberliegende Dichtbereiche oder Dichtlippen 15 aus weichem Gummi vorgesehen, die sich nach Einschieben einer Haubenscheibe in den Hohlraum 11 an die Scheibe anlegen und ein Eindringen von Feuchtigkeit in die Dichtung 2 wirksam verhindern.

Die Fig. 3 zeigt in einer Querschnittsansicht die Dichtung 2 aus Fig. 1 mit eingesetzter Scheibe 50. Die Gummidichtung 2 hält die Scheibe 50 ohne zusätzliche Verklebung sicher fest und dies ebenfalls ohne vorherigen Einsatz in das Rohr 1. Es ist gut zu erkennen, dass die Enden der Auskragungen und Dichtlippen 12 in Richtung der Tiefe 32 der Dichtung 2 umgebogen sind, wobei sie mehr nachgeben als der harte Gummiabschnitt 3. Die paarweisen Auskragungen 9, die hier unterschiedliche Wulstdurchmesser aufweisen, sind ebenfalls eingedrückt.

Die Fig. 4 zeigt ein zweiteiliges Schutzprofil mit einem rohrförmigen Element 20 für das Hohlrohr 1 und die Gummidichtung 2. Dabei ist zur Übersichtlichkeit auf die zeichnerische Darstellung einer eingeschobenen Haubenscheibe 50 verzichtet. Das Profil 20, welches in der Fig. 5 in einer anderen Ausgestaltung vergrössert dargestellt ist, verfügt über zwei seitliche Pfeilnasen 21, die in die pfeilförmigen Ausnehmungen 10 der Dichtung 2 eingreifen und die Scheibe 50 weiter sichern. Vorteilhafterweise können an dem Profil 20 weitere Auskragungen 22 vorgesehen sein, in die ein V-förmiges Schutzprofil 23 einsetzbar ist, welches eine Seitenfläche für die Haubenunterkante bilden kann. Dabei hat das Profil 20 keine tragende Funktion sondern bietet durch die Pfeilnuten 22 lediglich Befestigungsmöglichkeiten für weitere Elemente.

Der Vorteil dieser Vorgehensweise liegt darin, dass bei Beschädigungen dieser Profile 20 bzw. 23, welche vorzugsweise aus Kunststoff hergestellt sind, diese selbst leicht abgezogen werden und durch ein neues oder durch zwei neue ersetzt werden können. Die Befestigung und Klemmung der Haubenscheibe in den drei Elementen Hohlrohr 1, Profil 20 und eingesetzter Gummidichtung 2 ist davon nicht direkt betroffen.

Die Fig. 5 zeigt eine perspektivische Ansicht eines weiteren Haubenrahmens mit der Gummidichtung nach Fig. 2. Dabei ist ein Profil 24 mit einer in Scheibenrichtung vorgesehenen Verlängerung vorgesehen.

Zusätzlich zum Einsetzen und Festklemmen der Scheibe ist es möglich, diese in dem Gummiprofil 2 zu verkleben. Dabei bildet dann die Scheibe und das Gummiprofil 2 eine Einheit, die nur noch zusammen entfernt werden kann. Davon nicht betroffen ist, wie schon oben ausgeführt, die Wartung und der Ersatz der beiden Profile des Haubenrahmens.

## Patentansprüche

1. Scheibenbefestigung (1) für eine Haube eines Sesselliftes mit einem Haubenrahmen (1), der einen die Scheibe (50) der Haube aufnehmenden Schlitz (31) aufweist, und mit einem in den Haubenrahmen (1) einsetzbaren Gummiprofil (2), welches im Querschnitt einstückig ist, welches in der Tiefe (32) des Schlitzes (31) aus weicherem Material (4) besteht als in dem mit dem Haubenrahmen im Eingriff stehenden oberen Abschnitt, **dadurch gekennzeichnet, dass** an dem oberen Abschnitt (3) aus härterem Material des Gummiprofils (2) mindestens ein Paar von in das Innere (11, 32) des Schlitzes gerichtete Gummilippen (12) aus weichem Material vorgesehen sind, die sich paarweise gegenüberliegen.

2. Scheibenbefestigung nach Anspruch 1, **dadurch gekennzeichnet, dass** die Paare von Gummilippen (12) in Einführungsrichtung einer Scheibe nach innen gerichtet sind.

3. Scheibenbefestigung nach einem der vorstehenden Ansprüche, **dadurch gekennzeichnet, dass** das Gummiprofil (2) in einem ersten Rohr (1) des Haubenrahmens (1) mit einer Einschnürung (7) klemmbar ist und dass das Gummiprofil (2) über eine Feder-NutVerbindung (10, 21) in einem das erste Rohr (1) umgebenden, zweiten Rohr (20) des Haubenrahmens eingesetzt ist.

4. Scheibenbefestigung nach einem der vorstehenden Ansprüche, **dadurch gekennzeichnet, dass** am oberen Endbereich des oberen Abschnittes des Gummiprofils (2) zwei einander gegenüberliegende, entgegen der Einführungsrichtung ausgerichtete und gegenüber dem Material des oberen Abschnitts (3) des Gummiprofils (2) weichere Dichtlippen (15) vorgesehen sind.

## Claims

1. A mounting arrangement (1) of a window panel for a hood of a chairlift, comprising an enclosure frame (1), provided with a slot (31) that receives the window panel (50) of the hood, and a profiled rubber element (2), which may be inserted as one-piece in a cross-sectional view into the profiled rubber element (2) and which consists of softer material (4) at the bottom (32) of said slot (31) than at the upper section (3) that engages the enclosure frame, **characterized in that** on the upper section (3) of the profiled rubber element (2) made of harder material there are provided at least one pair of rubber lips (12) oriented toward the interior (11, 32) of said slot, facing each other in pairs, and made of soft material.

2. The mounting arrangement according to claim 1, wherein said pairs of rubber lips (12) are oriented toward the interior and in the direction of insertion of the sheet material.

3. The mounting arrangement according to one of the prior claims, wherein the rubber seal (2) having a recess (7) may be clamped into a first tubing (1) of the enclosure frame (1), and wherein the rubber seal (2) is inserted via a grooved connection (10, 21) into the second tubing (20) surrounding the first tubing (1) of said enclosure frame.

4. The mounting arrangement according to one of the prior claims, wherein the upper end of the upper section of the said rubber seal (2) is provided with two seal lips (15) that are softer compared to the material of the upper section (3) of the said rubber seal (2), facing each other, and oriented in a direction opposite the direction of insertion.

## Revendications

1. Fixation d'une vitre pour un capot de télésiège comportant un cadre de capot (1), qui possède une fente qui loge la vitre (50) du capot, et un profilé en caoutchouc (2), qui peut être inséré dans le capot (1) et est réalisé d'un seul tenant en coupe transversale et, dans la profondeur (32) de la fente (31), dans un matériau (4) plus mou que dans la section supérieure qui est en prise avec le cadre de capot, **caractérisée en ce que**, sur la section supérieure (3) réalisée dans un matériau plus dur du profilé en caoutchouc (2), sont prévues au moins une paire de lèvres en caoutchouc (12) qui sont dirigées vers l'intérieur (11, 32) de la fente et sont réalisées dans un matériau mou, et sont situées en vis-à-vis par paires.

2. Fixation de vitre selon la revendication 1, **caractérisée en ce que** les paires de lèvres en caoutchouc (12) sont dirigées vers l'intérieur dans la direction d'insertion d'une vitre.

3. Fixation de vitre selon l'une des revendications précédentes, **caractérisée en ce que** le profilé en caoutchouc (2) peut être serré dans un premier tube (1) du cadre de capot (1) comportant une partie rétrécie (7) et **en ce que** le profilé en caoutchouc (2) est inséré selon une liaison du type tenon et mortaise (10, 21) dans un second tube (20), qui entoure le premier tube (1), du cadre de capot.

4. Fixation de vitre selon l'une des revendications précédentes, **caractérisée en ce que** les lèvres d'étanchéité (15) situées réciproquement en vis-à-vis et orientées à l'opposé de la direction d'insertion plus souples que le matériau de la section supérieure (3) du profilé en caoutchouc (2) sont prévues dans la partie d'extrémité supérieure de la section supérieure du profilé en caoutchouc (2).
